# EUROPÄISCHE PATENTSCHRIFT

(11) **EP 2 085 179 B1**
(45) Veröffentlichungstag und Bekanntmachung des Hinweises auf die Patenterteilung: **18.07.2012**
(21) Anmeldenummer: 09001404.4
(22) Anmeldetag: 02.02.2009
(51) Int. Cl.: B23Q 11/08, F16P 3/02

(54) **Flexible Abdeckung**
Flexible covering
Recouvrement flexible

(30) Priorität: 01.02.2008 DE 102008007370; 07.05.2008 DE 102008022527; 30.12.2008 DE 102008063392
(43) Veröffentlichungstag der Anmeldung: 05.08.2009
(73) Patentinhaber: Eitec Führungsbahnschutz-Systeme GmbH, 85301 Schweitenkirchen (DE)
(72) Erfinder: Eisner, Karl Heinz, 85375 Neufarn (DE)
(74) Vertreter: Winter, Brandl, Fürniss, Hübner, Röss, Kaiser, Polte - Partnerschaft

(56) Entgegenhaltungen:
- EP-A- 0 090 171
- EP-A- 1 625 912
- DE-A1-102006 037 313
- DE-U1- 9 206 084
- DE-U1- 20 304 672
- DE-U1-202005 014 233

## Beschreibung

Die Erfindung betrifft eine flexible Abdeckung, insbesondere für Werkzeugmaschinen oder dergleichen gemäß dem Oberbegriff des Patentanspruches 1.

Derartige flexible Abdeckungen werden bei Werkzeugmaschinen verwendet, um empfindliche Maschinenelemente, wie beispielsweise Führungen, etc. gegenüber einem Arbeitsraum, in dem ein Werkstück bearbeitet wird, abzudecken. Dabei sind die Abdeckungen beispielsweise mit einer Spindel der Werkzeugmaschine verbunden und derart ausgeführt, dass sie deren Bewegung in X- oder Y-Richtung mitmachen müssen. Aufgrund der äußerst hohen Zerspanungsgeschwindigkeiten und Vorschübe moderner Werkzeugmaschinen müssen die Abdeckungen so ausgelegt sein, dass sie Fahrgeschwindigkeiten bis zu ca. 150 m/min und Beschleunigungen bis zu 2g Stand halten.

Der Grundaufbau einer derartigen Abdeckung ist beispielsweise in der EP 1 042 104 B1 der Anmelderin und der DE 20 304 672 U1 offenbart. Demgemäß hat eine gattungsgemäße flexible Abdeckung eine Gliederschürze, die aus einer Vielzahl von gelenkig miteinander verbundenen Gliedern besteht. Die Gliederschürze, die bei großen Werkzeugmaschinen bis zu 4 m hoch und 2 m breit sein kann, wird bei einer Verfahrrichtung in X-Richtung über obere und untere Führungen geführt. Bei herkömmlichen Lösungen ist an den Gliedern beidseitig jeweils ein hochwertiges Wälzlager ausgebildet, das in einer oberen und/oder unteren Führungsschiene läuft. Durch diese Wälzlagerung kann die Reibung beim Verfahren der Gliederschürze in X-Richtung relativ gering gehalten werden. Im praktischen Einsatz zeigte es sich jedoch, dass die üblichen Wälzlager den vorgenannten hohen Geschwindigkeiten und den sehr starken Beschleunigungen mit schnellen Richtungswechseln nicht Stand halten und nach vergleichsweise kurzer Zeit beschädigt sind, so dass diese Wälzlager ausgetauscht werden müssen. Die dafür erforderlichen Standzeiten der Werkzeugmaschinen werden allerdings von den Kunden nicht toleriert. Ausführungsbeispiele herkömmlicher Führungen sind in der von der Anmelderin verteilten Druckschrift "Flexible Glieder-Abdecksysteme" (3/2004) beschrieben.

Demgegenüber liegt der Erfindung die Aufgabe zugrunde, eine flexible Abdeckung zu schaffen, die auch bei hohen Verfahrgeschwindigkeiten und Beschleunigungen einsetzbar ist und bei der ein verringerter Wartungsaufwand erforderlich ist.

Diese Aufgabe wird durch eine flexible Abdeckung mit den Merkmalen des Patentanspruches 1 gelöst.

Erfindungsgemäß wird bei der flexiblen Abdeckung anstelle der aufwendigen Wälzlager eine Gleitführung verwendet, die durch ein Führungselement und eine Führungsschiene gebildet ist. Es zeigte sich überraschender Weise, dass mit einer derartigen Gleitführung die Gliederschürze mit den gleichen Verfahrgeschwindigkeiten und Beschleunigungen wie wälzgelagerte Systeme verfahren werden kann, wobei allerdings der Verschleiß der Führungselemente erheblich geringer als bei den herkömmlichen Lösungen ist, so dass die Wartungsintervalle der Werkzeugmaschine verlängert und entsprechend die Standzeiten verkürzt sind.

Erfindungsgemäß wird es bevorzugt, wenn die Gleitpaarung aus unterschiedlichen Materialien besteht, wobei vorzugsweise die an den Gliedern der Gliederschürze befestigten Führungselemente aus Stahl hergestellt sind, während die Führungsschiene aus einem verschleißfesten Kunststoff besteht.

Die Führungselemente sind jeweils im Bereich eines Endabschnittes eines Gliedes der Gliederschürze befestigt und stehen beidseitig über dessen Großflächen vor.

Das Führungselement ist als ein Führungsbolzen ausgebildet, der in eine Aufnahme des Gliedes eingesetzt ist.

Dabei ist es möglich, den Führungsbolzen in diese Aufnahme einzupressen, über eine Passung oder formschlüssig in dem Glied zu lagern.

Erfindungsgemäß hat der Führungsbolzen ballige Stirnflächen und die Führungsschiene hat einen rechteckförmigen Führungsraum, dessen gliederschürzenseitige Wandung einen Führungsschlitz hat, der von dem Endabschnitt der Gliederschürze durchsetzt ist, so dass dessen seitliche Führung vereinfacht ist.

Bei einer Variante der Erfindung ist der Führungsbolzen mehrteilig ausgeführt. Die Verbindung der einzelnen Teile des Führungsbolzens kann dann durch Presspassung, durch Schweißen oder durch ein alternatives Verbindungsverfahren erfolgen. Dabei wird es bevorzugt, den Führungsbolzen zweiteilig auszuführen, wobei die Trennebene etwa innerhalb des Glieds verläuft.

Die beiden Führungsbolzenteile können so ausgeführt sein, dass der Führungsbolzen formschlüssig axial gesichert ist.

Die Sicherung des Führungsbolzens ist besonders einfach, wenn dieser mit einer Nut ausgeführt ist, in die eine zusätzliche Axialsicherung eintaucht.

Diese Axialsicherung kann ein Stift oder dergleichen sein, der den Führungsbolzen oder eine an diesem ausgebildete Ausnehmung durchsetzt, wobei aus dem Führungsbolzen auskragende Endabschnitte in eine Ausnehmung des Glieds eintauchen, so dass der Führungsbolzen axial gesichert ist.

Die Verdrehsicherung für den Führungsbolzen ist verbessert, wenn der Stift mit Presspassung zwischen Führungsbolzen und Glied aufgenommen ist.

Zur Verbesserung der Führung können Umfangsabschnitte des Führungsbolzens zu Gleitflächen abgeflacht sein, die dann in der Führungsschiene geführt sind.

Einem Kippen der Gliederschürze kann vorgebeugt werden, indem diese über das Führungselement hinaus verlängert ist und in eine Ausnehmung der Führungsschiene eintaucht.

Bei der Variante, bei der ein Kippen der Gliederschürze durch eine Ausnehmung in der Führungsschiene verhindert wird, kann diese Ausnehmung dem vorgenannten Führungsschlitz gegenüber liegen.

Die Erfindung wird vorzugsweise mit einer Gliederschürze ausgeführt, bei der die einzelnen Glieder über kederartige Verbindungselemente miteinander verbunden sind.

Eine Verschmutzung der Führung für die Abdeckung kann zuverlässig verhindert werden, wenn arbeitsraumseitig ein Abstreifer vorgesehen wird, der mittelbar oder unmittelbar an der Führungsschiene befestigt ist und dessen Abstreiferlippe dichtend an der Gliederschürze anliegt.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 eine dreidimensionale Teilansicht einer erfindungsgemäßen flexiblen Abdeckung für eine Werkzeugmaschine;
Figur 2 einen Schnitt entlang der Linie A-A in Figur 1;
Figur 3 eine Detailansicht der Führung aus Figur 1;
Figur 4 eine Variante der Führung aus Figur 1;
Figuren 5a, 5b, 5c Ansichten eines weiteren Ausführungsbeispiels eines Glieds einer Abdeckung gemäß Figur 1;
Figuren 6a, 6b Ansichten eines Ausführungsbeispiels mit einem geteilten Führungsbolzen;
Figur 7a, 7b Ansichten eines Ausführungsbeispiels mit einem verschweißten Führungsbolzen;
Figuren 8a, 8b Ansichten eines Ausführungsbeispiels mit einer Axialsicherung;
Figuren 9a, 9b, 9c, 9d Ansichten eines Ausführungsbeispiels mit abgeflachtem Führungsbolzen;
Figuren 10a, 10b, 10c ein Ausführungsbeispiel einer nicht zur Erfindung gehörende Gliederschürze mit Gleitscheibe;
Figur 11 ein Ausführungsbeispiel einer nicht zur Erfindung gehörende Gliederschürze mit quaderförmiger Gleitscheibe;
Figur 12 ein Ausführungsbeispiel mit einem Stift als Axialsicherung;
Figuren 13a, 13b, 13c eine Variante des Ausführungsbeispiels aus Figur 12;
Figur 14 eine Variante eines Führungsbolzens und
Figur 15 ein Ausführungsbeispiel einer Abdeckung mit verbesserter Abdichtung.

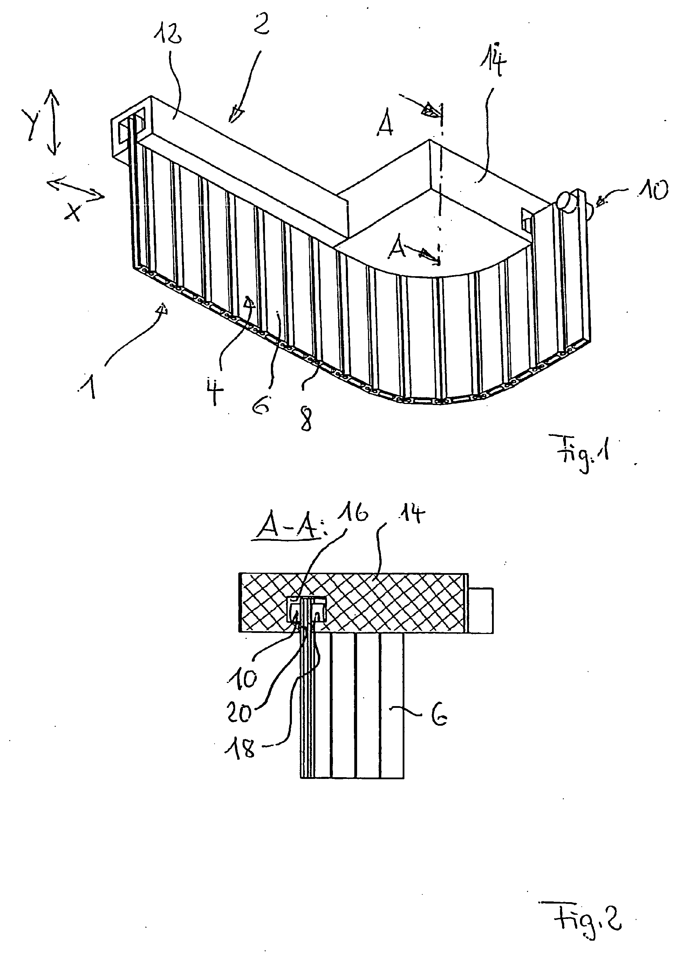

In Figur 1 ist ein Ausführungsbeispiel einer flexiblen Abdeckung 1 einer Werkzeugmaschine dargestellt, wobei die Abdeckung 1 mit einem beweglichen Werkzeugmaschinenteil, beispielsweise mit einer Spindel gekoppelt ist und deren Verfahrbewegungen in X-Richtung folgt. Eine derartige Abdeckung 1 hat an ihren in Y-Richtung oben und unten liegenden Endabschnitten jeweils Führungen, wobei in der Darstellung gemäß Figur 1 lediglich eine obere Führung 2 dargestellt ist, entlang der eine Gliederschürze 4 bewegbar ist. Figur 1 zeigt dabei eine Variante, bei der die Gliederschürze 4 innerhalb der Führung 2 "aufgehängt" ist. Die in Y-Richtung unten liegende Führung dient dann lediglich zur seitlichen Abstützung der Gliederschürze 4. In Umkehrung dieses Prinzips könnte die Gliederschürze 4 anstelle der "Aufhängung" in Figur 1 auch an der nicht dargestellten, unten liegenden Führung in X-Richtung und in Y-Richtung abgestützt sein.

Die Gliederschürze 4 besteht aus einer Vielzahl von Gliedern 6, die über ein kederartiges Verbindungselement 8 miteinander verbunden sind. Hinsichtlich des Aufbaus derartiger Gliederschürzen wird auf das eingangs beschriebene Patent oder auf die unter www.eitec.de beschriebenen flexiblen Abdecksysteme verwiesen. Im Unterschied zu den herkömmlichen gattungsgemäßen Abdeckungen 1 ist die Führung 2 als Gleitführung ausgeführt, wobei an den Gliedern 6 eine Vielzahl von Führungselementen 10 ausgebildet sind, die gleitend geführt sind. Diese Führung erfolgt beispielsweise über eine oder mehrere Führungsschienen 12. Bei dem in Figur 1 dargestellten Ausführungsbeispiel wird die Gliederschürze 4 um 90° umgelenkt. Diese Umlenkung erfolgt über ein Kurvenstück 14, an das sich rechts in Figur 1 wiederum eine Schiene anschließt, die der besseren Erläuterung halber jedoch weggelassen ist. Die Führungsschiene 12 und das Führungsstück 14 sind mit einem identischen Führungsprofil ausgeführt, das die Führungselemente 10 der Gliederschürze 6 aufnimmt.

Figur 2 zeigt einen Schnitt entlang der Linie A-A durch das Kurvenstück 14. Man erkennt dabei die Aufhängung der Gliederschürze 6, die mit den Führungselementen 10 im Führungsprofil 16 geführt ist und dabei gleitend entlang einer beidseitig der Gliederschürze 6 ausgebildeten Führungsfläche 18 geführt ist, wobei die Gliederschürze 6 einen Führungsschlitz 20 im Führungsstück 14 und in der Führungsschiene 12 durchsetzt, so dass der mit dem Führungselement 10 ausgeführte Endabschnitt des Glieds 6 in die Führungsausnehmung 16 eintaucht.

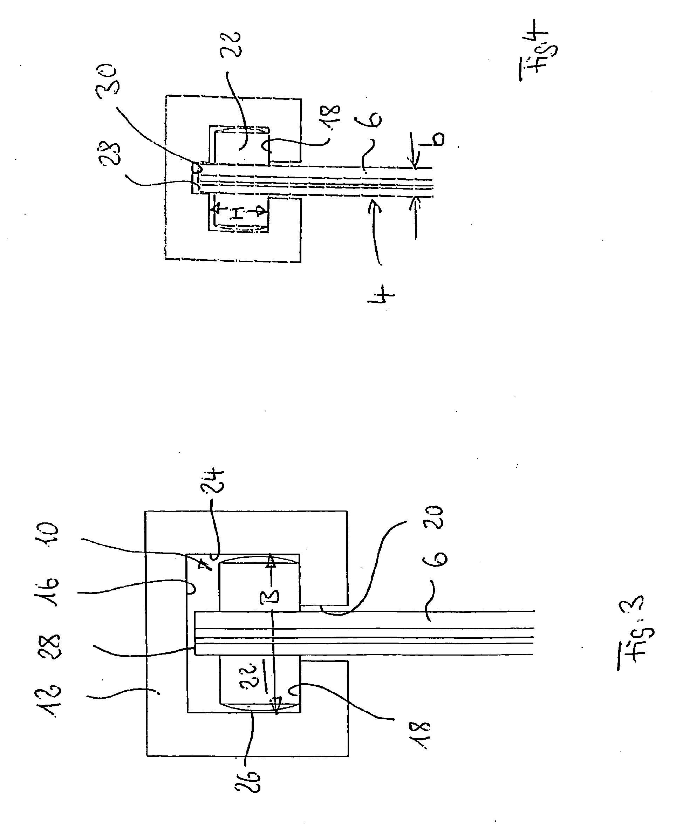

Figur 3 zeigt eine vergrößerte Ansicht in X-Richtung auf die linke Stirnseite der Führung 2 in Figur 1. Demgemäß ist die Führungsschiene 12 etwa als Rechteckprofil ausgeführt, in dem die ebenfalls etwa rechteckförmige Führungsausnehmung 16 ausgebildet ist, in die der oben liegende Endabschnitt der Glieder 6 eintaucht. Wie erläutert, ist an diesem in die Führungsausnehmung 16 eintauchenden Endabschnitt der Glieder 6 das Führungselement 10 befestigt, das bei dem dargestellten Ausführungsbeispiel als sich quer zur Ebene des Glieds 6 erstreckender Führungsbolzen 22 ausgeführt ist. Dieser liegt mit seinem in Figur 3 unten liegenden Umfangsabschnitt auf der Führungsfläche 18 der Schiene 12 auf. Das Material dieser Gleitpaarung ist dabei im Hinblick auf eine hohe Verschleißfestigkeit und eine geringe Reibung optimiert. Erfindungsgemäß wird es bevorzugt, wenn der Führungsbolzen 22 aus Metall, beispielsweise aus Messing, Stahl, vorzugsweise nitriertem (einsatzgehärtetem) Stahl und die Führungselemente der Führung 2, beispielsweise die Führungsschienen 12 und das Kurvenstück 14 aus einem verschleißfesten Kunststoff, beispielsweise aus einem hochmolekularen Polyethylen besteht.

Die Axiallänge des Führungsbolzens 22 ist etwas geringer als die Breite B der Führungsausnehmung 16 gewählt, so dass die Stirnflächen des Führungsbolzens 22 in geringem Abstand zu Seitenwandungen 24 ausgebildet sind. Beim dargestellten Ausführungsbeispiel sind die Stirnflächen 26 der Führungsbolzen 22 ballig oder kalottenförmig ausgeführt, so dass eine optimale seitliche Führung gewährleistet ist. Die Breite des Führungsschlitzes 20 ist so ausgelegt, dass während des Betriebs ein seitliches Anliegen der Glieder 6 am Führungsschlitz 20 verhindert wird.

Um ein seitliches Kippen der Gliederschürze 4 mit den Gliedern 6 zu verhindern, kann - wie in Figur 4 dargestellt - die Führungsausnehmung 16 in ihrer Höhe geringfügig größer als der Durchmesser des Führungsbolzens 22, jedoch geringer als der Abstand zwischen der Führungsfläche 18 und der in den Figuren 3 und 4 oben liegenden Stirnkante 28 der Gliederschürze 4 bzw. der Glieder 6 ausgebildet sein. Bei dieser Variante taucht dann der durch die Stirnkante 28 begrenzte Endabschnitt der Gliederschürze 4 in eine Ausnehmung 30 ein, deren Breite etwas größer als die Breite b der Gliederschürze 4 gewählt ist, so dass diese zusätzlich seitlich geführt ist und nicht kippen kann.

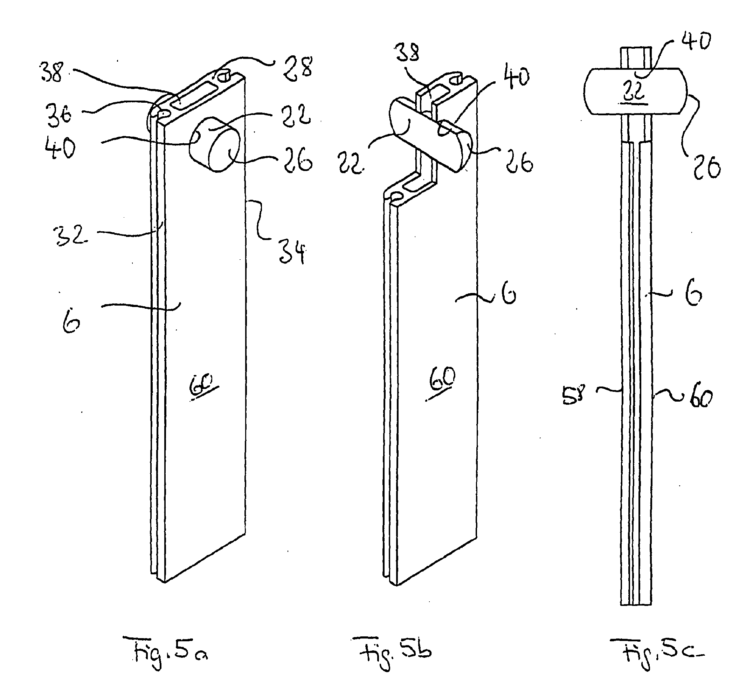

Der Aufbau der einzelnen Glieder 6 der Gliederschürze 4 wird anhand der Figuren 5a, 5b, 5c erläutert. Da der Grundaufbau der Glieder 6 aus dem eingangs genannten europäischen Patent bekannt ist, sind ausführliche Erläuterungen entbehrlich. Derartige Glieder 6 bestehen herkömmlicher Weise aus Aluminium und haben an ihren Längskanten 32 jeweils Aufnahmenuten 36, in die die aus Kunststoff bestehenden Verbindungselemente 8 eingezogen werden. Die Großflächen 58, 60 der Glieder 6 sind etwa rechteckförmig ausgebildet, wobei sich der Führungsbolzen 22 rechtwinklig zu diesen durch das jeweilige Glied 6 hindurch erstreckt. Zur Minimierung des Gewichtes sind die Glieder 6 mit einem Hohlraum 38 ausgeführt. Gemäß der geschnittenen Darstellung in Figur 5b, 5c ist der Führungsbolzen 22 beim dargestellten Ausführungsbeispiel einstückig ausgeführt und durchsetzt eine Aufnahme 40, die in den den Hohlraum 38 begrenzenden Wandungen des Glieds 6 ausgebildet ist. Bei dieser Variante sind der Durchmesser des Führungsbolzens 22 und der Aufnahme 40 so ausgelegt, dass der Führungsbolzen 22 mit einer Presspassung im Glied 6 fixiert ist. Selbstverständlich sind auch andere Verbindungskonstruktionen möglich, von denen einige in der Folge beschrieben werden. Prinzipiell kann der Führungsbolzen 22 auch durch Einkleben, Schweißen, Schrauben, kraft- oder formschlüssig aufgenommen sein.

Bei dem zuvor beschriebenen Ausführungsbeispiel wird der Führungsbolzen 22 einstückig vorgefertigt und dann in die Aufnahme 40 eingepresst, so dass seine Endabschnitte seitlich über die Großflächen des Glieds 6 symmetrisch vorstehen und sich der in der Darstellung gemäß Figur 5c T-förmige Aufbau ergibt. Problematisch bei einer derartigen Variante ist, dass die Presspassung mit hoher Präzision ausgeführt sein muss, so dass sie auch bei starken Temperaturänderungen und den hohen Belastungen eine hinreichende Relativpositionierung des Führungsbolzens 22 mit Bezug zum zugeordneten Glied 6 ermöglicht.

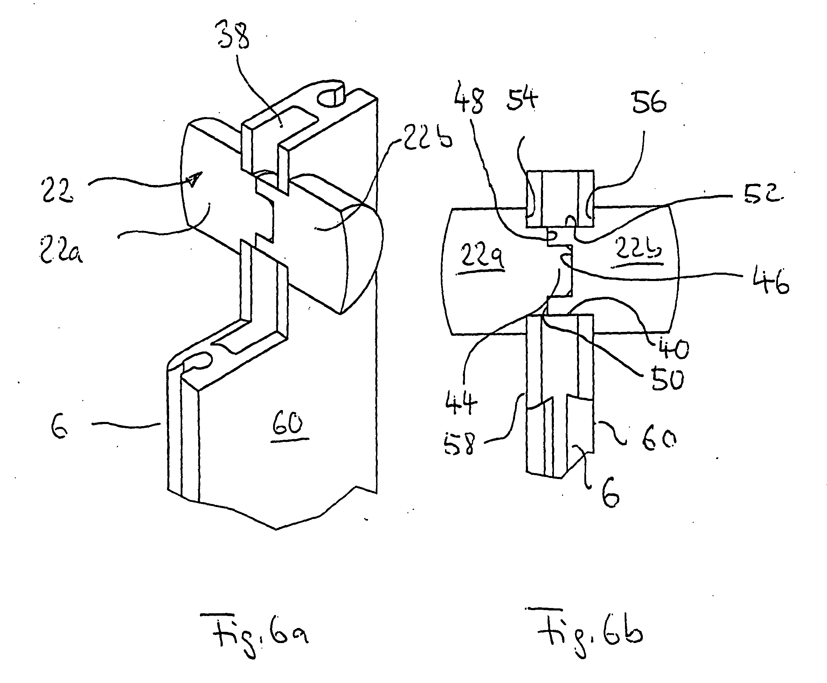

In den Figuren 6a, 6b ist eine Variante dargestellt, bei der der Führungsbolzen 22 zweiteilig mit Führungsbolzenteilen 22a, 22b ausgeführt ist. Bei dem dargestellten Ausführungsbeispiel ist am Führungsbolzenteil 22a ein Axialvorsprung 44 ausgebildet, dem eine an der gegenüber liegenden Stirnseite des Führungsbolzenteils 22b ausgebildete Stirnausnehmung 46 zugeordnet ist. Die Abmessungen des Axialvorsprungs 44 und der Stirnausnehmung 46 sind so gewählt, dass die beiden Führungsbolzenteile 22a, 22b über eine Presspassung miteinander verbunden werden, wobei diese dann flächig mit ihren ringförmigen Stirnflächenabschnitten 48, 50 aneinander liegen. An den Führungsbolzenteilen 22a, 22b sind jeweils umlaufende Ausnehmungen ausgebildet, die sich im zusammengesetzten Zustand zu einer umlaufenden Ringnut 52 ergänzen, deren Ringstirnflächen 54, 56 dann an den Großflächen 58, 60 des jeweiligen Glieds 6 anliegen, so dass der Führungsbolzen 12 formschlüssig in Axialrichtung gesichert ist. Die Sicherung in Radialrichtung erfolgt durch Anlage des Nutgrundes der Ringnut 52 an der Aufnahme 40 im Glied 6. D.h. bei einer derartigen Lösung muss keine aufwendige Presspassung zur Lagefixierung des Führungsbolzens 22 mit Bezug zum Glied 6 ausgeführt sein. Die Ausbildung der Presspassung zum Verbinden der beiden Führungsbolzenteile 22a, 22b ist dabei wesentlich einfacher zu realisieren.

Wie in den Figuren 6a, 6b dargestellt, sind der Axialvorsprung 44 und die zugeordnete Stirnausnehmung 46 so ausgebildet, dass sie in der Ansicht gemäß Figur 6b etwa innerhalb des Bereichs liegen, der durch die beiden Großflächen 58, 60 begrenzt ist.

Bei der Montage des Führungsbolzens 22 werden die beiden Führungsbolzenteile 22a, 22b in die Aufnahme 40 eingesetzt und miteinander verpresst, so dass sie in der vorbeschriebenen Weise in Axial- und Radialrichtung lagefixiert sind.

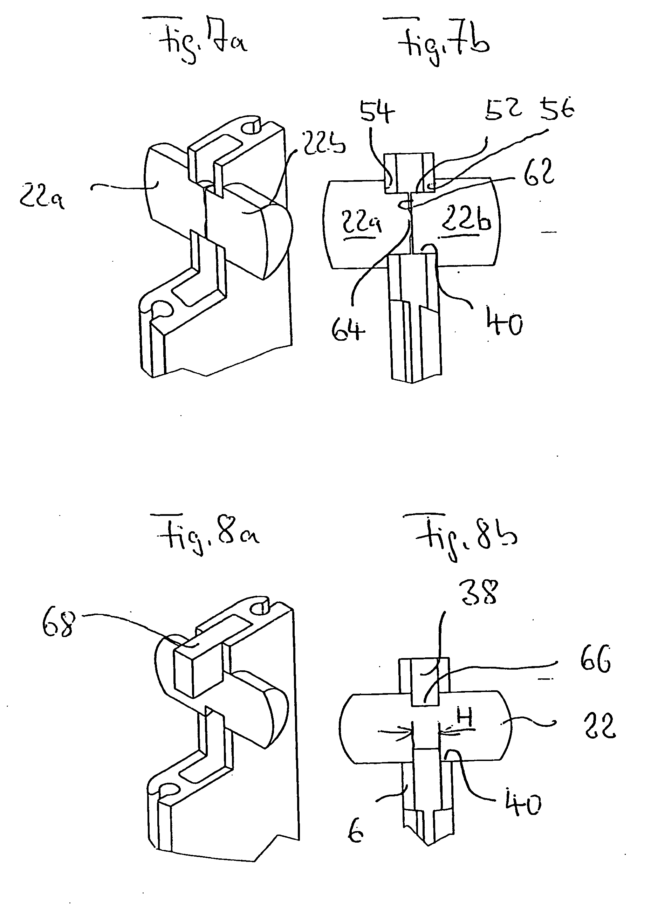

Selbstverständlich kann die Verbindung der beiden Führungsbolzenteile 22a, 22b auch auf andere Weise erfolgen. So ist in den Figuren 7a, 7b ein Ausführungsbeispiel gezeigt, bei dem die beiden Führungsbolzenteile 22a, 22b durch Schweißen miteinander verbunden werden. Dabei ist beispielsweise eine innere Stirnfläche 62 des Führungsbolzenteils 22b eben ausgeführt, während an der gegenüber liegenden inneren Stirnfläche ein Schweißbuckel 64 vorgesehen ist, der nach dem Einsetzen der beiden Führungsbolzenteile 22a, 22b in die Aufnahme 40 durch Elektroschweißen teilweise aufgeschmolzen wird, um eine Verbindung zwischen den Teilen 22a, 22b zu realisieren. Im Übrigen entspricht der Aufbau des Führungsbolzens 22 demjenigen aus dem Ausführungsbeispiel in den Figuren 6a, 6b, so dass weitere Erläuterungen entbehrlich sind. Im verschweißten Zustand ist der Führungsbolzen 22 dann wieder sowohl in Axial- als auch in Radialrichtung gesichert, so dass eine zuverlässige Führung auch bei hohen Belastungen gewährleistet ist.

Anhand der Figuren 6, 7 sind Ausführungsbeispiele erläutert, bei denen der Führungsbolzen 22 einen vergleichsweise komplexen Aufbau hat und ein relativ hoher Aufwand zur Montage erforderlich ist, wobei allerdings die Lagefixierung äußerst zuverlässig erfolgt.

Figur 8a, 8b zeigt ein vereinfachtes Ausführungsbeispiel, mit dem ebenfalls eine exzellente Lagefixierung des Führungsbolzens 22 ermöglicht ist. Bei diesem Ausführungsbeispiel ist der Führungsbolzen 22 - ähnlich wie beim Ausführungsbeispiel gemäß den Figuren 3 und 4 - einstückig ausgebildet und hat in seinem mittleren Bereich eine umlaufende Sicherungsnut 66. Diese Sicherungsnut 66 ist in der Darstellung gemäß Figur 8b mit einem rechteckförmigen Querschnitt ausgeführt, wobei die Breite H der Sicherungsnut 66 (siehe Figur 8b) der lichten Breite des Hohlraums 38 des Glieds 6 entspricht. Zur Axialsicherung wird gemäß Figur 8a in diesen Hohlraum 38 ein Sicherungskeil 68 eingesetzt, der dann in die Sicherungsnut 66 eintaucht, so dass der Führungsbolzen 22 ebenfalls zuverlässig in Axialrichtung festgelegt ist. Die Führung in Radialrichtung erfolgt wiederum durch Anlage der sich seitlich an die Sicherungsnut 66 anschließenden Außenumfangsflächen des Führungsbolzens 22 an der Aufnahme 40 in den den Hohlraum 38 begrenzenden Wandungen des Gliedes 6. Der Sicherungskeil 68 kann durch Presspassung oder durch eine nachträglich ausgebildete Hinterschneidung, beispielsweise durch eine Verformung der Seitenwandungen des Glieds 6 gesichert werden.

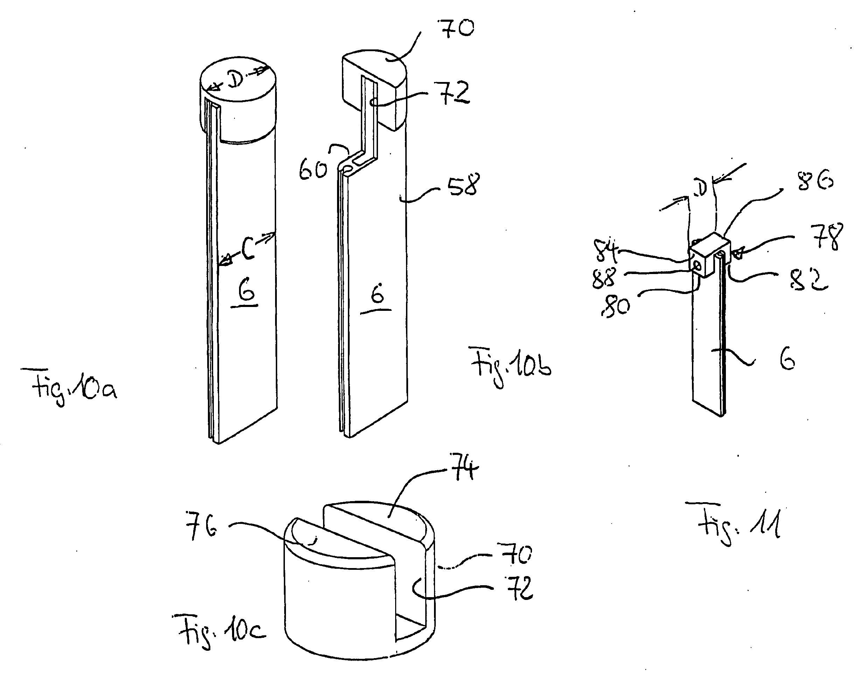

Bei den vorbeschriebenen Ausführungsbeispielen durchsetzt der einteilig oder zweiteilig ausgeführte Führungsbolzen 22 das jeweilige Glied 6 der Gliederschürze 4 in Querrichtung. In den Figuren 10 und 11 sind Ausführungsbeispiele gezeigt, bei denen das Führungselement 10 auf den betreffenden Endabschnitt des jeweiligen Gliedes 6 aufgesetzt wird.

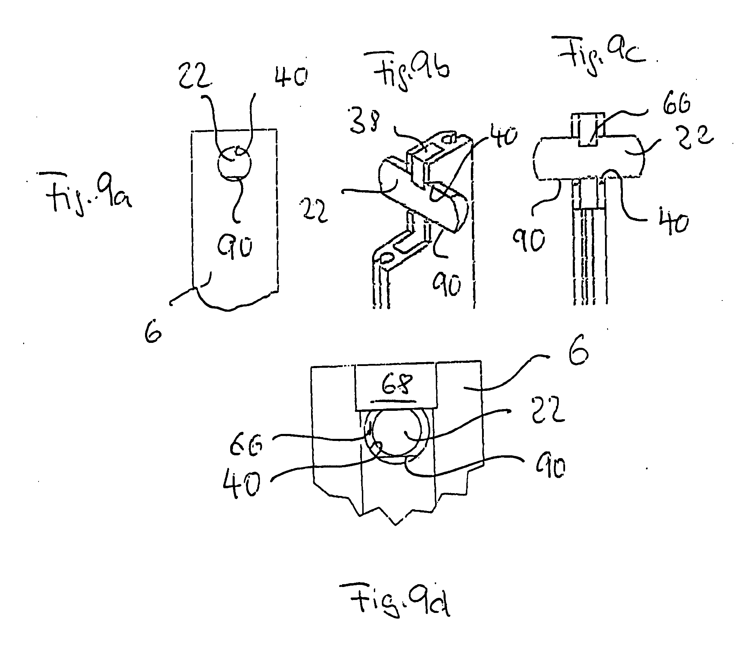

Bei den vorbeschriebenen Ausführungsbeispielen liegt der Sicherungsbolzen 22 im Wesentlichen linienförmig entlang einer vergleichsweise geringen Auflagefläche auf der Führungsfläche 18 auf. Zur Vergrößerung dieser Auflagefläche kann der Führungsbolzen 22 führungsflächenseitig mit einer Abflachung 90 ausgeführt sein, die sich achsparallel erstreckt. Auf diese wird dann die Auflagefläche wesentlich vergrößert, so dass einerseits die Gleitreibung verringert ist und andererseits eine exaktere Führung gewährleistet ist. Diese Abflachung 90 kann bei allen vorbeschriebenen Ausführungsbeispielen eingesetzt werden. Bei der Variante gemäß den Figuren 9a, 9b, 9c und 9d ist der Führungsbolzen 22 wiederum mit einer Sicherungsnut 66 ausgeführt, wobei die Abflachung 90 gemäß den Figuren 9c, 9d durch den Nutgrund verläuft. Die Axialsicherung erfolgt dann wieder über einen in den Hohlraum 38 eingesetzten Sicherungskeil 68, der dann formschlüssig in die Sicherungsnut 66 eintaucht.

Die Figuren 10a, 10b, 10c zeigen eine Variante, bei der das Führungselement 10 als Gleitscheibe 70 ausgeführt ist. Diese hat einen etwa zylinderförmigen Aufbau mit einer sich in Diagonalrichtung erstreckenden Nut 72, deren lichte Weite entsprechend der Breite b (siehe Figur 4) des Glieds 6 ausgeführt ist, so dass die Gleitscheibe 70, wie in den Figuren 10a, 10b dargestellt, auf den Endabschnitt des Glieds 6 aufgesetzt werden kann. Die Sicherung der Gleitscheibe 70 erfolgt dabei durch kraft- oder formschlüssiges Verbinden mit dem Glied 6. Dabei kann beispielsweise ein in den Figuren 10 nicht dargestellter Bolzen quer zur Nut 72 die Gleitscheibe 70 und den Endabschnitt des Glieds 6 durchsetzen. Wie weiterhin aus den Figuren 10a, 10b hervorgeht, entspricht der Durchmesser D der Gleitscheibe 70 etwa der Breite C des Glieds 6, so dass die Gleitscheibe 70 die beiden Großflächen 58, 60 des Glieds 6 seitlich überstreckt. Auf diese Weise ergeben sich an der Gleitscheibe 70 relativ große, ebene Gleitflächen 74, 76, entlang denen die Gleitscheibe 70 an den Führungsflächen 18 abgleitet, so dass eine sehr zuverlässige Führung gewährleistet ist.

Wie bei dem eingangs beschriebenen Ausführungsbeispiele ist dabei die Breite B der Führungsausnehmung 16 nur wenig größer als der Durchmesser D der Gleitscheibe 70 ausgelegt, so dass die Gleitscheibe 70 auch seitlich entlang der Seitenwandungen 24 der Führungsausnehmung 16 geführt ist.

Figur 11 zeigt eine Variante, bei der anstelle der zylinderförmigen Gleitscheibe 70 ein etwa quaderförmiger Gleitblock 78 verwendet wird, dessen Breite D beispielsweise etwa dem Durchmesser D der Gleitscheibe 70 entspricht. Auch bei dieser Variante ist durch die seitlich überstehenden großflächigen Gleitflächen 80, 82 eine optimale Abstützung an den Führungsflächen 18 der Führungsschiene 12 gewährleistet. Die Stirnflächen 84, 86 des Gleitblocks 78 können ebenfalls wieder ballig ausgeführt sein, um eine gute seitliche Führung an den Seitenwandungen 24 der Führungsausnehmung 16 zu gewährleisten. Bei dem dargestellten Ausführungsbeispiel erfolgt die Sicherung mit einem seitlich in den Führungsblock 78 und in den Endabschnitt des Glieds 6 eingesetzten Sicherungsstift 88. Die Gleitscheibe 70 gemäß Figur 10 kann entsprechend gesichert werden.

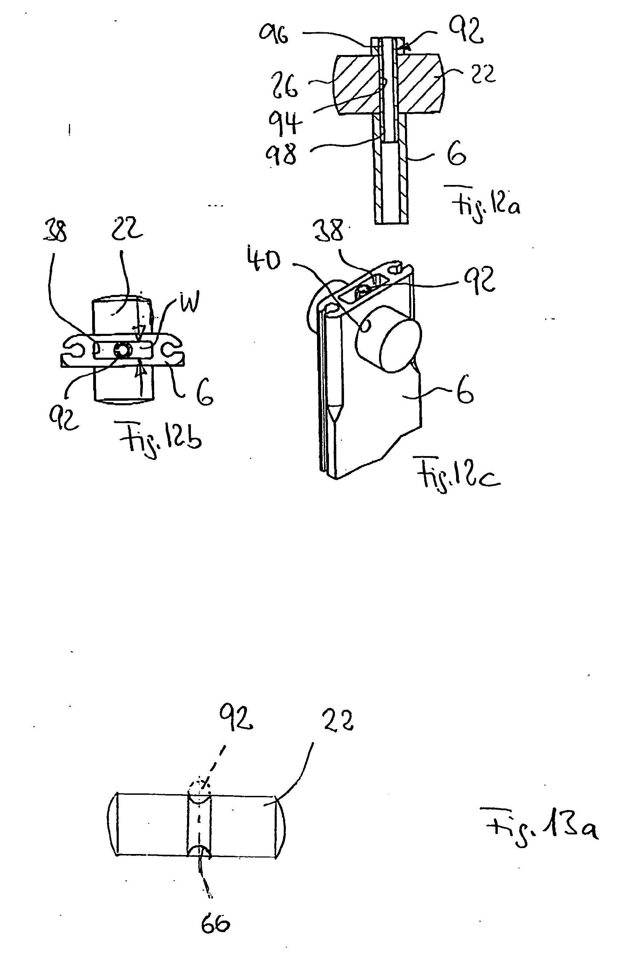

In den Figuren 12a, 12b, 12c ist ein Ausführungsbeispiel einer Gliederschürze für eine erfindungsgemäße Abdeckung gezeigt, bei der der Führungsbolzen 22 ähnlich wie bei dem anhand von Figur 5 erläuterten Ausführungsbeispiel als Zylinderstift mit balligen Stirnflächen 26 ausgeführt ist, der in eine Aufnahme 40 des Glieds 6 eingesetzt ist. Die Axialsicherung erfolgt bei diesem Ausführungsbeispiel durch einen Stift 92, der in eine Diagonalbohrung 94 des Führungsbolzens 22 eingesetzt ist. Beim dargestellten Ausführungsbeispiel ist der Stift 92 als hülsenförmiger Spannstift ausgeführt, der beim Einpressen in die Diagonalbohrung 94 aufgrund einer Durchmesserverengung verspannt wird. Die Axiallänge des Stiftes 92 ist größer als der Durchmesser des Führungsbolzens 22, so dass zwei Endabschnitte 96, 98 radial aus dem Führungsbolzen 22 auskragen. Diese beiden Endabschnitte 96, 98 tauchen in den vorbeschriebenen Hohlraum 38 des Glieds 6 ein, wobei der Außendurchmesser des Spannstiftes 92 in etwa der lichten Weite W des Hohlraums 38 entspricht, so dass der Führungsbolzen 22 zuverlässig axial gesichert ist.

Dieser Stift 92 lässt sich nach dem Einsetzen des Führungsbolzens 22 in die Aufnahme 40 von oben (Ansicht nach Figur 12c) her in den Führungsbolzen 22 einschlagen, wobei nach dem vollständigen Einsetzen die in Figur 12c sichtbare Stirnfläche des Stiftes 92 mit der entsprechenden Stirnfläche des Glieds 6 bündig abschließt. Selbstverständlich können die vorbeschriebenen Axialsicherungen unabhängig von den dargestellten Ausführungsbeispielen bei allen beschriebenen Führungsbolzen 22 zur Axialsicherung eingesetzt werden.

Bei dem vorbeschriebenen Ausführungsbeispiel ist der Führungsbolzen 22 zur Axialsicherung mit der Diagonalbohrung 94 ausgeführt, in die der Stift 92 eingesetzt wird. Die Herstellung einer derartigen Diagonalbohrung 94 ist vergleichsweise aufwendig, da zum Vermeiden eines Auslaufens des Bohrers (seitliches Versetzen) eine saubere Zentrierung, beispielsweise in Form einer Ankörnung vorgesehen werden muss.

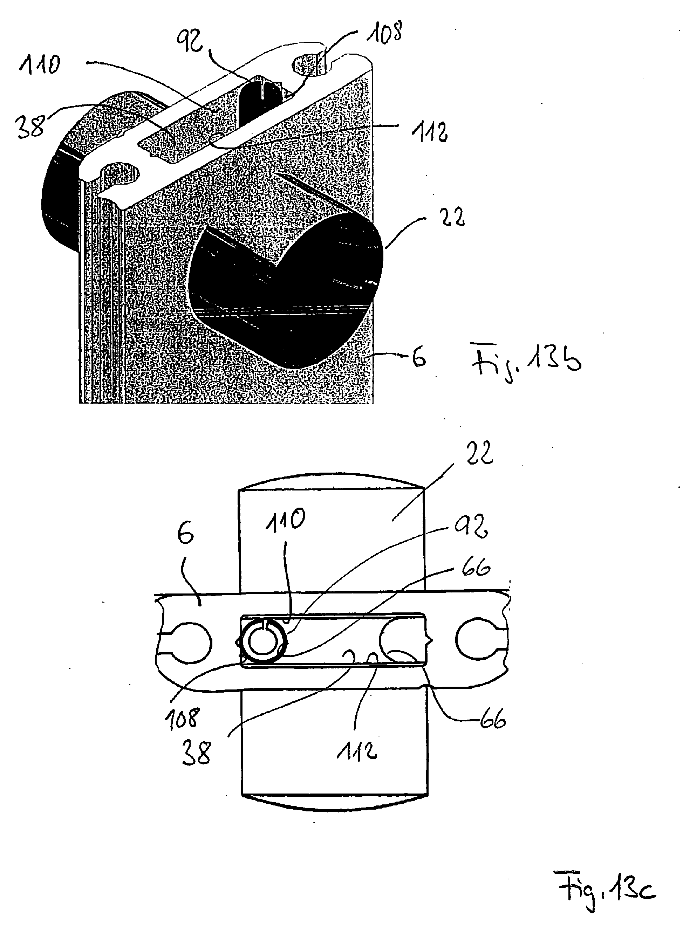

Dieser Nachteil wird mit dem in den Figuren 13a, 13b, 13c dargestelltem Ausführungsbeispiel überwunden. Figur 13a zeigt eine Seitenansicht des Führungsbolzens 22, der ähnlich wie beim Ausführungsbeispiel gemäß Figur 9a, 9b, 9c, 9d mit einer umlaufenden Sicherungsnut 66 ausgeführt ist, die gemäß Figur 13b, die eine dreidimensionale Darstellung des oberen Endabschnitts eines Glieds 6 der Gliederschürze zeigt, im eingebauten Zustand etwa im Bereich des Hohlraums 38 angeordnet ist. Diese ringförmige, mit einem abgerundeten Nutgrund ausgeführte Sicherungsnut 66 kann auf einfache Weise durch Drehen oder Rollen ausgebildet werden, so dass der Fertigungsaufwand wesentlich geringer als bei dem in Figur 12 dargestellten Ausführungsbeispiel ist. Der in Figur 13a lediglich gestrichelt angedeutete Stift 92 wird dann etwa tangential eingesetzt, so dass er einerseits abschnittsweise in die durch die Sicherungsnut 66 geschaffene Ausnehmung eintaucht und andererseits an der Stirnwandung 108 und den Seitenwandungen des Hohlraums 38 anliegt, so dass der Führungsbolzen 22 zuverlässig in Axialrichtung Lagefixiert ist. Der Durchmesser des Stifts 92 ist wieder mit dem Maß W ausgelegt, so dass dieser zwischen die längeren Seitenflächen 110, 112 des Hohlraums 38 eingeklemmt wird.

Figur 13c zeigt eine Ansicht von oben auf die Anordnung gemäß Figur 13b. Demgemäß ist der als Spannhülse ausgeführte Stift 92 in Anlage an den beiden Seitenflächen 110, 112 des Hohlraums 38. Um ein Verdrehen des Führungsbolzens 22 während der Bewegung der Gliederschürze zu vermeiden, sind die Sicherungsnut 66 und der Außendurchmesser des Stifts 92 so gewählt, dass letzterer nur mit einer vergleichsweise engen Presspassung in den von der Sicherungsnut 96 einerseits und von der Stirnwandung 108 und den Seitenwandungen 110, 112 andererseits begrenzten Raum eingeklemmt ist und somit ein Verdrehen des Führungsbolzens 22 und somit eine vorzeitige Abnutzung zuverlässig vermeidet. Bei dem dargestellten Ausführungsbeispiel ist der Stift 92 als Spannhülse ausgebildet. Selbstverständlich können auch andere Elemente eingesetzt werden, die eine zuverlässige Fixierung durch Klemmen oder dergleichen ermöglichen.

Der Vorteil einer derartigen Spannhülse ist, dass sie mit sehr geringem Aufwand hergestellt und weitgehend ohne Berücksichtigung von engen Toleranzen eingesetzt werden kann. Bei dem dargestellten Ausführungsbeispiel ist in den rechten Bereich (Ansicht nach Figur 13c) der Sicherungsnut 66 kein Stift 92 eingesetzt. Bei besonders hohen Anforderungen kann jedoch auch eine doppelte Sicherung mittels zweier Stifte 92 vorgesehen werden.

Im übrigen entspricht das Ausführungsbeispiel gemäß den Figuren 13a, 13b dem zuvor beschriebenen Ausführungsbeispiel, so dass weitere Erläuterungen entbehrlich sind.

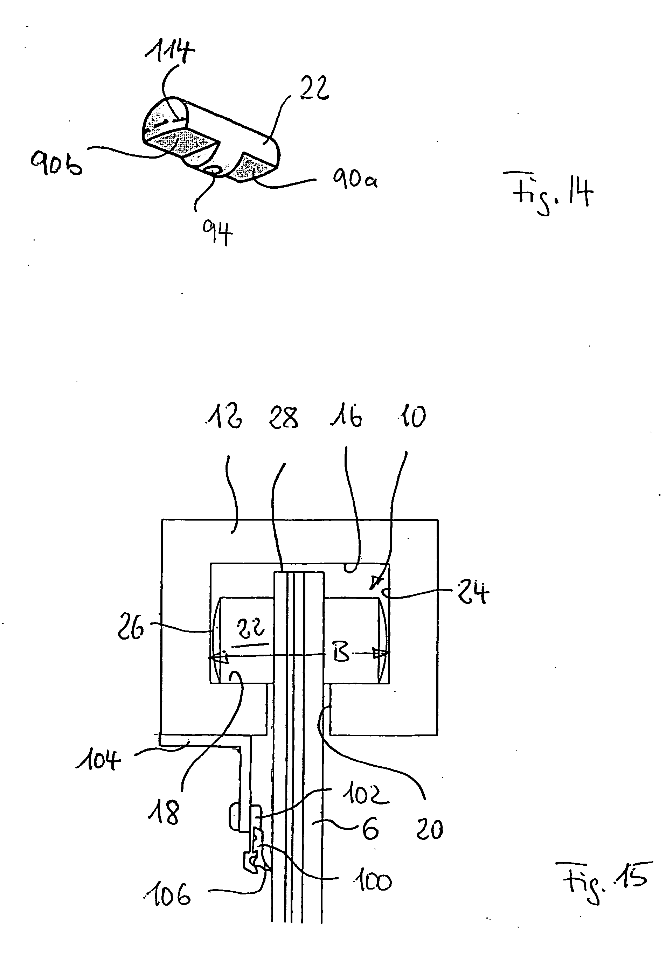

Figur 14 zeigt eine weitere Variante des in Figur 12 dargestellten Ausführungsbeispiels, bei dem ein Konstruktionsdetail des in den Figuren 9a bis 9d dargestellten Ausführungsbeispiels aufgegriffen ist. Ähnlich wie bei dem in Figur 12 dargestellten Ausführungsbeispiel ist der Führungsbolzen 22 mit einer Diagonalbohrung 94 zur Aufnahme des Stifts 92 ausgeführt. Alternativ könnte natürlich - wie vorstehend anhand Figur 13 erläutert, anstelle der Diagonalbohrung 94 eine umlaufende oder abschnittsweise ausgebildete Sicherungsnut 66 vorgesehen werden. Zur Verbesserung der Gleitführung und zur Minimierung des Verschleißes sind die der Führungsfläche 18 zugewandten Bereiche des Führungsbolzens 22 mit Abflachungen 90a, 90b ausgeführt, durch die eine flächige Auflage des Führungsbolzens 22 auf der Führungsfläche 18 der Führungsschiene 12 gewährleistet ist. Mit gestrichelten Linien 114 ist dabei noch die Untergrenze eines Verschleißbereichs gekennzeichnet. Im Prinzip ist bei allen vorbeschriebenen Ausführungsbeispielen ein derartiger Verschleißbereich vorgesehen. Beim Überschreiten dieses Verschleißbereichs muss der entsprechende Führungsbolzen 22 ausgewechselt werden. Bei den Ausführungsbeispielen ohne Abflachungen 90 am Führungsbolzen 22 wird sich nach einer gewissen Betriebsdauer der Gliederschürze durch Verschleiß eine entsprechende Abflachung einstellen, so dass der Führungsbolzen dann "durch Benutzung" in etwa die Kontur wie in Figur 14 dargestellt erhält. Beim Ausführungsbeispiel gemäß Figur 14 wird diese Abflachung jedoch gezielt und mit vergleichsweise hoher Präzision ausgeführt, um das Gleitverhalten weiter zu optimieren.

In der praktischen Erprobung der Abdeckung zeigte es sich, dass beispielsweise während der zerspanenden Bearbeitung von Werkstücken in dem von der Abdeckung abgesperrten Arbeitsraum Wirbel auftreten können, so dass sich im Bereich der Führung Späne oder Kühl-/Schmiermittel absetzen oder Dämpfe kondensieren, so dass diese Führung verschmutzt wird und entsprechend die leichtgängige Verschiebbarkeit der Gliederschürze 4 nicht gewährleistet werden kann. Um eine derartige Ablagerung von Verschmutzungen im Führungsbereich zu unterbinden, kann gemäß dem Ausführungsbeispiel in Figur 15 arbeitsraumseitig (d.h. in Figur 15 links von der Gliederschürze 6) ein Abstreifer 100 vorgesehen werden, der die Führung gegenüber dem Arbeitsraum abdeckt. Dieser Abstreifer 100 kann beispielsweise einen Aufbau haben, wie er in der parallel hinterlegten Patentanmeldung der Anmelderin beschrieben ist, so dass hier nur die zum Verständnis der Erfindung wesentlichen Bauelemente beschrieben werden. Der Abstreifer 100 ist an einem Halter 102 befestigt, der seinerseits über einen Befestigungswinkel 104 an der Führungsschiene 12 befestigt ist. Diese Befestigung ist so gewählt, dass der Abstreifer 100 mit einer Abstreiferlippe 106 dichtend an der arbeitsraumseitigen Großfläche der Gliederschürze 4 anliegt, so dass der Gleitführungsbereich der Abdeckung gegenüber dem Arbeitsraum zuverlässig abgedeckt ist und somit eine Ablagerung von Verschmutzungen aufgrund der Verwirbelungen im Arbeitsraum zuverlässig verhindert ist.

Prinzipiell kann auch beidseitig der Gliederschürze jeweils ein Abstreifer 100 vorgesehen werden, so dass die Gliederschürze in der Darstellung gemäß Figur 15 zwischen zwei etwa symmetrisch zueinander angeordneten Abstreifern 100 verläuft.

Wie bereits erwähnt, ist bei allen Ausführungsbeispielen eine Verdrehsicherung vorgesehen, die verhindert, dass der Führungsbolzen aufgrund der Gleitreibung verdreht wird. Der Aufbau derartiger Verdrehsicherungen ist bekannt, so dass diesbezügliche Ausführungen entbehrlich sind.

Offenbart ist eine flexible Abdeckung für eine Werkzeugmaschine, wobei eine Gliederschürze über Führungselemente entlang einer Führungsschiene verschiebbar geführt ist. Die Führungselemente und die Führungsschiene sind erfindungsgemäß als Gleitführung ausgeführt.

### Bezugszeichenliste:

- 1: Abdeckung
- 2: Führung
- 4: Gliederschürze
- 6: Glied
- 8: Verbindungselement
- 10: Führungselement
- 12: Führungsschiene
- 14: Kurvenstück
- 16: Führungsausnehmung
- 18: Führungsfläche
- 20: Führungsschlitz
- 22: Führungsbolzen
- 24: Seitenwandung
- 26: Stirnfläche
- 28: Stirnkante
- 30: Ausnehmung
- 32: Längskante
- 34: Längskante
- 36: Aufnahmenut
- 38: Hohlraum
- 40: Aufnahme
- 44: Axialvorsprung
- 46: Stirnausnehmung
- 48: Stirnflächenabschnitt
- 50: Stirnflächenabschnitt
- 52: Ringnut
- 54: Ringstirnfläche
- 56: Ringstirnfläche
- 58: Großfläche
- 60: Großfläche
- 62: innere Stirnfläche
- 64: innere Stirnfläche
- 66: Sicherungsnut
- 68: Sicherungskeil
- 70: Gleitscheibe
- 72: Nut
- 74: Gleitfläche
- 76: Gleitfläche
- 78: Gleitblock
- 80: Gleitfläche
- 82: Gleitfläche
- 84: Stirnfläche
- 86: Stirnfläche
- 88: Sicherungsstift
- 90: Abflachung
- 92: Stift
- 94: Diagonalbohrung
- 96: Endabschnitt
- 98: Endabschnitt
- 100: Abstreifer
- 102: Halter
- 104: Befestigungswinkel
- 106: Abstreiferlippe
- 108: Stirnwandung
- 110: Seitenfläche
- 112: Seitenfläche

## Patentansprüche

1. Flexible Abdeckung, insbesondere für Werkzeugmaschinen oder dergleichen, mit einer eine Vielzahl von gelenkig miteinander verbundenen Gliedern (6) aufweisenden Gliederschürze (4), wobei die Gliederschürze (4) innerhalb einer Führung (2) über Führungselemente (10) aufgehängt und entlang zumindest einer Führungsschiene (12) verschiebbar geführt ist,
wobei die Führungsschiene (12) eine etwa rechteckförmig ausgeführte Führungsausnehmung (16) hat, deren gliederschürzenseitige Wandung mit einem Führungsschlitz (20) ausgeführt ist, der von dem Endabschnitt der Gliederschürze (4) durchsetzt und in dem das Führungselement (10) geführt ist,
**dadurch gekennzeichnet, dass** die Führungselemente (10) und die Führungsschiene (12) eine Gleitführung ausbilden,
wobei das Führungselement (10) ein Führungsbolzen (22) ist, der in eine Aufnahme (40) eines Gliedes (6) kraft- oder formschlüssig eingesetzt ist, und
mittels einer Verdrehsicherung (68, 88, 54, 56) lagefixiert ist,
wobei der Führungsbolzen (22) ballige Stirnflächen (26) hat, so dass eine optimale seitliche Führung gewährleistet ist.

2. Abdeckung nach Patentanspruch 1, wobei das Führungselement (10) aus Metall, vorzugsweise aus Stahl, und die Führungsschiene (12) aus Kunststoff hergestellt sind.

3. Abdeckung nach einem der Patentansprüche 1 oder 2, wobei der Führungsbolzen (22) mehrteilig ausgeführt ist, wobei die Führungsbolzenteile (22, 22b) vorzugsweise durch Presspassung oder durch Schweißen verbunden sind, und wobei die Trennebene vorzugsweise etwa innerhalb des Glieds (6) angeordnet ist, und wobei die Führungsbolzenteile (22a, 22b) vorzugsweise Stützschultern (54, 56) haben, die im verbundenen Zustand an Großflächenabschnitten des Glieds (6) anliegen.

4. Abdeckung nach einem der vorhergehenden Ansprüche, wobei die Axialsicherung ein Stift (92) oder dergleichen ist, der den Führungsbolzen (22) oder eine an diesem oder in diesem ausgebildete Ausnehmung (66) durchsetzt und dessen Endabschnitte (96, 98) in eine Ausnehmung (38) des Glieds (6) eintauchen.

5. Abdeckung nach Patentanspruch 4, wobei der Stift (92) eine Spannhülse ist, die mit Presspassung im Glied (6) und/oder zwischen Führungsbolzen (22) und Glied (6) sitzt.

6. Abdeckung nach einem der vorhergehenden Patentansprüche, wobei das Führungselement (10) mit abgeflachten Gleitflächen (74, 76; 90) ausgeführt ist.

## Claims

1. Flexible cover, in particular for machine tools or similar, with a sliding apron (4) having a plurality of members (6) connected together to articulate, whereby the sliding apron (4) is hung inside a guide (2) by means of guide elements (10) and guided such that it can be moved along at least one guide rail (12),
whereby the guide rail (12) has an approximately rectangular guide recess (16) whose wall on the sliding apron side is made with a guide slot (20) through which the end section of the sliding apron (4) passes and in which the guide element (10) is guided,
**characterised in that** the guide elements (10) and the guide rail (12) form a sliding guide,
whereby the guide element (10) is a guide bolt (22) which is inserted into a containing hole (40) of a member (6) as a force fit or an interlocking fit, and
is secured in position by means of an anti-turn device (68, 88, 54, 56),
whereby the guide bolt (22) has rounded end faces (26) in order to ensure optimal lateral guiding.

2. Cover in accordance with patent claim 1, whereby the guide element (10) is made from metal, preferably steel, and the guide rail (12) is made from plastic.

3. Cover in accordance with one of the patent claims 1 or 2, whereby the guide bolt (22) is made in several pieces, whereby the guide bolt parts (22, 22b) are preferably connected by press fitting or by welding and whereby the parting plane is arranged preferably approximately inside the member (6), and whereby the guide bolt parts (22a, 22b) preferably have support shoulders (54, 56) which rest in the connected state on large surface sections of member (6).

4. Cover in accordance with one of the foregoing patent claims, whereby the axial retention is a pin (92) or similar which passes through the guide bolt (22) or through a recess (66) formed on or in the latter and whose end sections (96, 98) enter into a recess (38) in the member (6).

5. Cover in accordance with patent claim 4, whereby the pin (92) is a spring dowel pin which is located by press fitting in member (6) and / or between guide bolt (22) and member (6).

6. Cover in accordance with one of the foregoing patent claims, whereby the guide element (10) is made with flattened sliding surfaces (74, 76; 90).

## Revendications

1. Recouvrement flexible, en particulier pour des machines-outils ou similaires, avec un tablier à maillons (4) présentant une pluralité de maillons (6) reliés de manière articulée entre eux, sachant que le tablier à maillons (4) est guidé par suspension dans un guidage (2) par des éléments de guidage (10) et par coulissement le long d'au moins un rail de guidage (12),
sachant que le rail de guidage (12) présente un évidement de guidage (16) réalisé à peu près en forme de rectangle, dont la paroi côté tablier à maillons est réalisée avec une fente de guidage (20) qui est traversée par la section d'extrémité du tablier à maillons (4) et dans laquelle est guidé l'élément de guidage (10),
**caractérisé en ce que** les éléments de guidage (10) et le rail de guidage (12) réalisent un guidage à glissement,
sachant que l'élément de guidage (10) est un boulon de guidage (22) qui est inséré à force ou par complémentarité de formes dans un logement (40) d'un maillon (6), et
est fixé en position à l'aide d'un blocage de rotation (68, 88, 54, 56),
sachant que le boulon de guidage (22) présente des surfaces frontales bombées (26) de façon à garantir un guidage latéral optimal.

2. Recouvrement selon la revendication 1, sachant que l'élément de guidage (10) est composé de métal, de préférence d'acier, et le rail de guidage (12) est composé de plastique.

3. Recouvrement selon l'une quelconque des revendications 1 ou 2, sachant que le boulon de guidage (22) est réalisé en plusieurs parties, sachant que les parties de boulon de guidage (22, 22b) sont reliées de préférence par ajustage serré ou par soudage, et sachant que le plan de séparation est disposé de préférence à peu près dans le maillon (6), et sachant que les parties de boulon de guidage (22a, 22b) présentent de préférence des épaulements d'appui (54, 56) qui reposent à l'état relié contre des sections de grande surface du maillon (6).

4. Recouvrement selon l'une quelconque des revendications précédentes, sachant que le blocage axial est une goupille (92) ou similaire qui traverse le boulon de guidage (22) ou un évidement (66) réalisé sur ou dans celui-ci et dont les sections d'extrémité (96, 98) s'enfoncent dans un évidement (38) du maillon (6).

5. Recouvrement selon la revendication 4, sachant que la goupille (92) est une douille de serrage qui loge par ajustage serré dans le maillon (6) et/ou entre le boulon de guidage (22) et le maillon (6).

6. Recouvrement selon l'une quelconque des revendications précédentes, sachant que l'élément de guidage (10) est réalisé avec des surfaces de glissement (74, 76 ; 90) aplaties.
